# EUROPÄISCHE PATENTANMELDUNG

(11) **EP 1 199 846 A1**
(43) Veröffentlichungstag der Anmeldung: **24.04.2002**
(21) Anmeldenummer: 00122603.4
(22) Anmeldetag: 17.10.2000
(51) Int. Cl.: H04L 12/40, G06F 13/12

(54) **Verfahren zur automatischen Gerätekonfiguration in einem Feldbus-System**

(71) Anmelder: SIEMENS AKTIENGESELLSCHAFT, 80333 München (DE)
(72) Erfinder: Diehl, Michael, 80997 München (DE)

(57) **Zusammenfassung**

Die Erfindung befasst sich mit einem Verfahren zur automatischen Gerätekonfiguration in einem Feldbus-System, insbesondere in EWSD, mit mehreren Netzwerk-Adressen für mehrere Slave-Stationen, an dem eine Master-Station und mindestens eine Slave-Station mit einer bestimmten Netzwerk-Adresse angeschlossen sind. Erfindungsgemäß werden folgende Schritte durchgeführt:
Abfrage, ob an einer beliebigen Netzwerk-Adresse eine Slave-Station angeschlossen ist, nach deren Betriebszustand sowie deren Identifikationsnummer;
Beantworten der Diagnoseabfrage durch die Slave-Station;
Ermitteln der Konfigurationsdaten der Slave-Station;
Aufbauen eines Parametersatzes der Slave-Station;
Aktivieren der Slave-Station durch Überführen in den Nutzdatenaustausch.

## Beschreibung

Die Erfindung befasst sich mit einem Verfahren zur automatischen Gerätekonfiguration in einem Feldbus-System, insbesondere in EWSD, mit mehreren Netzwerk-Adressen für mehrere Slave-Stationen, an dem eine Master-Station und mindestens eine Slave-Station mit einer bestimmten Netzwerk-Adresse angeschlossen sind.

In EWSD (Elektronisches Wählsystem Digital) wurde die Realisierung des System-Panel (SYP) modernisiert. Die Kommunikation innerhalb der SYP-Hardware-Komponenten ist mit einem Feldbus PROFIBUS DP möglich, der nachfolgend als PROFIBUS bezeichnet wird. PROFIBUS steht für Process Field Bus und DP für Dezentrale Peripherie. Über diesen Feldbus werden die Aufgaben Alarmerfassung, Alarmweiterleitung und PROFIBUS-V.24 Übertragung erfüllt. Die Kommunikation im PROFIBUS DP läuft folgendermaßen ab: Ein PROFIBUS DP-Master, der nachfolgend als DP-Master bezeichnet wird, führt einen zyklischen Datenaustausch mit PROFIBUS DP-Slaves, die nachfolgend als DP-Slaves bezeichnet werden, über das PROFIBUS-Netzwerk durch. Die DP-Slaves sind passive PROFIBUS-Stationen, die nur durch den DP-Master angesprochen werden können. Dagegen ist der DP-Master eine aktive PROFIBUS-Station, welche die Initiative bei einem Datenaustausch mit den DP-Slaves übernimmt. Die Input-Daten der DP-Slaves werden an den DP-Master und die Output-Daten des DP-Masters an die DP-Slaves gesendet. Damit dieser Datenaustausch zwischen DP-Master und den DP-Slaves erfolgen kann, müssen die DP-Slaves vom DP-Master parametriert und konfiguriert werden. Der DP-Master benötigt die Konfigurationsdaten der DP-Slaves zu ihrer Aktivierung. Die Konfigurationsdaten werden manuell erstellt und dem DP-Master zur Verfügung gestellt. Wird ein neuer DP-Slave an den PROFIBUS angeschlossen, so wird er nicht automatisch vom DP-Master in den Nutzdatenaustausch übernommen. Ein Projektierer muss die Konfigurationsdaten des DP-Slave dem DP-Master zur Verfügung stellen, damit dieser den DP-Slave ansprechen kann. Dieses Verfahren ist mühsam, zeitaufwendig und der DP-Master muss den Nutzdatenverkehr unterbrechen, um neue Konfigurationsdaten anzunehmen. Außerdem kann ein DP-Slave mit einem bestimmten Input/Output-Profil nicht durch einen DP-Slave mit gleichem Profil, aber von einem anderen Hersteller, ersetzt werden, ohne dass dabei die Konfigurationsdaten im DP-Master modifiziert werden müssen, da diese DP-Slaves unterschiedliche IDENT-Nummern aufweisen.

Aufgabe der Erfindung ist es deswegen, beim Austausch bzw. Hinzufügen neuer Slave-Stationen ein manuelles Eingreifen in die Konfigurationsdaten einer Master-Station zu vermeiden.

Diese Aufgabe wird durch ein Verfahren mit den Merkmalen des Anspruchs 1 gelöst. Vorteilhafte Weiterbildungen der Erfindung sind Gegenstand der Unteransprüche.

Durch das erfindungsgemäße Verfahren erkennt die Master-Station automatisch, wenn eine Slave-Station an das Netzwerk angeschlossen wird und auf seine Aktivierung wartet. Dies geschieht durch die Steuerung der Master-Vorrichtung mittels geeigneter Dienst-Kombinationen. Die Konfigurationsdaten zur Ansteuerung der Slave-Station werden von der Master-Station selbst gebildet. Dadurch ist es möglich, dass eine Slave-Station durch ein Gerät eines anderen Herstellers mit gleichem Profil ausgetauscht werden kann. Außerdem ist eine Neuinbetriebnahme einer Slave-Station möglich, die bisher noch nicht im Netzwerk integriert war. Dies alles ist ohne einen manuellen Eingriff durch einen Projektierer in die Konfigurationsdaten der Master-Station möglich.

Bevorzugt wird als Feldbus-System ein PROFIBUS DP, als Master-Station ein PROFIBUS DP-Master und als Slave-Station ein PROFIBUS DP-Slave verwendet. Damit ist eine Verwendung des Verfahrens in EWSD in der aktuellen Ausgestaltung möglich.

Weiterhin ist es vorteilhaft, wenn beim Warten einer Slave-Station auf ihre Aktivierung deren Konfigurationsdaten in der Master-Station zwischengespeichert werden. Dadurch sind die Konfigurationsdaten der Slave-Station sofort in der Master-Station verfügbar.

Weiterhin ist es vorteilhaft, wenn bestimmte Netzwerk-Adressen des Feldbus-Systems für Slave-Stationen reserviert werden, die eine bestimmte Aufgabe erfüllen können, wobei dies insbesondere beim Hochlauf der Master-Station erfolgt. Dadurch wird gewährleistet, dass an diese Netzwerk-Adressen nur eine Slave-Station angeschlossen und in Betrieb genommen werden kann, die eine bestimmte Aufgabe erfüllen kann.

Besonders vorteilhaft ist es, wenn für eine Netzwerk-Adresse ein Profil definiert wird, insbesondere eine maximale Anzahl von Input/Output-Bytes, das zur Erfüllung der bestimmten Aufgabe durch die Slave-Station nötig ist. Dadurch ist es möglich, dass durch die vom Anwender getroffene Profildefinition sichergestellt wird, dass eine Slave-Station, deren Profil für die gegebene Aufgabe ungeeignet ist, erkannt wird.

Weiterhin ist es vorteilhaft, wenn bei einem gültigen Profil die Konfigurationsdaten im Konfigurationsbereich der Master-Station zwischengespeichert werden, ansonsten eine Fehlermeldung erfolgt. Durch die Fehlermeldung beim Vorhandensein eines ungültigen Profils erkennt der Anwender in besonders einfacher Weise, dass die angeschlossene Slave-Station nicht zur Erfüllung der gestellten Aufgabe geeignet ist. Durch die Zwischenspeicherung bei einem gültigen Profil sind die Konfigurationsdaten sofort in der Master-Station abrufbar.

Weiterhin ist es vorteilhaft, wenn ein Melden, ob eine Netzwerk-Adresse auf das Vorhandensein einer Slave-Station geprüft werden soll, mittels einer Zeitsteuerung, insbesondere zyklisch, erfolgt. Dadurch wird in vorgegebenen Zeitabständen eine Überprüfung der Netzwerk-Adressen gewährleistet, so dass eine Slave-Station, die integriert werden soll, nicht lange auf die Integration warten muss.

Weiterhin ist es vorteilhaft, wenn die Netzwerk-Adressen in einem Wertebereich von 0 bis 126 inkrementiert werden. Dadurch ist es möglich, dass nur die vorhandenen Netzwerk-Adressen abgefragt werden.

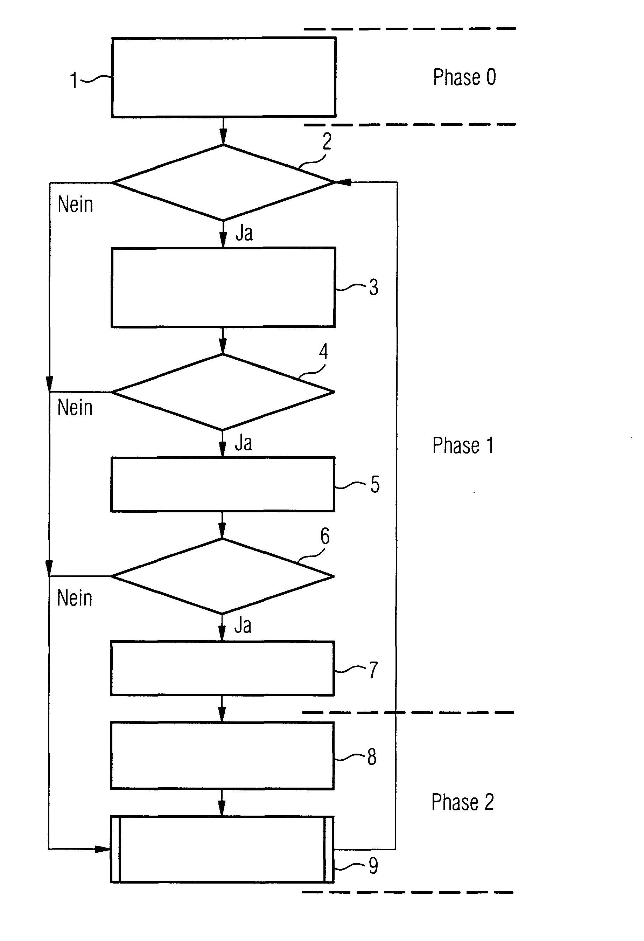

Weitere Vorteile und Einzelheiten der Erfindung sind Gegenstand des anhand der Zeichnung beschriebenen Ausführungsbeispiels. Die einzige Figur zeigt ein Flussdiagramm eines erfindungsgemäßen Verfahrens zur Autokonfiguration eines PROFIBUS DP.

Die in der Figur dargestellte Autokonfiguration wird für EWSD Classic beschrieben. Dabei wird als Feldbus ein PROFIBUS DP verwendet. Als Master-Station wird ein PROFIBUS DP-Master und als Slave-Station ein PROFIBUS DP-Slave verwendet. Die Master-Station ist in der Lage, gleichzeitig den Betrieb eines Klasse 1 und Klasse 2 Masters gemäß den Normen DIN 19245 und EN 50170 zu erfüllen. Der Algorithmus für die Autokonfiguration besteht auf einer Software-Applikation, die auf der Dienste- und Datenschnittstelle der Master-Station aufsetzt. Die Autokonfiguration läuft in drei Phasen ab: Phase 0, Phase 1 und Phase 2.

In Phase 0 erfolgt in einem ersten Schritt 1 eine Festlegung einer Profildefinition. Diese besteht aus zwei Teilkomponenten. Zum einen werden entsprechend der Aufgaben, die über PROFIBUS DP realisiert werden sollen, der Adressraum des PROFIBUS für Slave-Stationen reserviert, welche diese Aufgabe erfüllen können. Dies geschieht beim Hochlauf der Master-Station. Die Netzwerk-Adresse wird beim Hochlauf auf 0 gesetzt. Zum anderen wird für die Slave-Stationen ein Profil festgelegt, das zur Aufgabenerfüllung benötigt wird. Bspw. wird die maximale Anzahl an Input/Output-Bytes festgelegt. Die Profildefinition ist nötig, damit an den Netzwerk-Adressen sich nur solche Slave-Stationen befinden, die in der Lage sind, die gestellte Aufgabe zu erfüllen.

Bspw. ist es für die Erfassung von Alarmen nötig, eine Slave-Station einzurichten, die 32 Bit binäre Input-Daten zur Verfügung stellt. Für diese Aufgabe werden hier die Netzwerk-Adressen von 10 bis 13 reserviert. Dies bedeutet, dass nur Slave-Stationen mit 32 Bit Input die Netzwerk-Adressen 10 bis 13 annehmen können, die damit automatisch der Alarmerfassung dienen. Die Master-Station stellt die Alarmdaten in dem Input-Datenbereich der Slave-Stationen 10 bis 13 zur Verfügung. Falls sich eine Slave-Station außerhalb der definierten Netzwerk-Adressen befindet, wird sie nicht für die Aufgabe der Alarmerfassung herangezogen. Dies entspräche einer Verletzung der Adressdefinition. Wird dagegen eine Slave-Station an der Netzwerk-Adresse 10 angeschlossen, die 8 Bit Output-Daten zur Verfügung stellt, so handelt es sich um eine Profilverletzung. Diese Slave-Station wird als fehlerhaft angeschlossene Station erkannt und von der Master-Station nicht angesprochen.

In der Phase 0 wird die Master-Station der Klasse 1 in den Zustand "OPERATE" überführt.

An die Phase 0 schließt sich die Phase 1 an. In einem zweiten Schritt 2 wird nach dem Hochlaufen der Master-Station mittels einer Zeitsteuerung gemeldet, ob eine neue Netzwerk-Adresse auf das Vorhandensein einer Slave-Station geprüft werden soll. Ist dies der Fall, so erfolgt ein Timeout der Master-Station und es schließt sich ein dritter Schritt 3 des erfindungsgemäßen Verfahrens an. Falls dies nicht der Fall ist, erfolgt ein Sprung zu einem neunten Schritt 9 in Phase 2, der weiter unten beschrieben wird.

Im dritten Schritt 3 wird die Netzwerk-Adresse inkrementiert, so dass sie einen Wertebereich von 0 bis 126 nicht überschreitet. Die Netzwerk-Adresse 127 wird dabei auf die Netzwerk-Adresse 0 gesetzt. Nun wird eine Diagnose-Abfrage abgesetzt.

In einem vierten Schritt 4 wird die Abfrage von einer Slave-Station beantwortet. Aus den Antwortdaten kann der Betriebszustand der Slave-Station, die Netzwerk-Adresse, unter der die Slave-Station geantwortet hat, und die IDENT-Nummer (Identifikationsnummer) der Slave-Station abgeleitet werden. Die Auswertung der Diagnose zeigt, ob eine Slave-Station auf ihre Aktivierung wartet. Ist die Slave-Station für ihre Aktivierung bereit, so werden die Netzwerk-Adresse der Slave-Station und der IDENT-String im Konfigurationsbereich der Master-Station zwischengespeichert. Es schließt sich dann ein fünfter Schritt 5 an. Ergibt die Auswertung, dass keine Slave-Station auf ihre Aktivierung wartet, so erfolgt ein Sprung zum neunten Schritt 9 in Phase 2, der unten näher beschrieben wird.

Im fünften Schritt 5 werden mittels eines bestimmten Dienstes die Konfigurationsdaten der Slave-Station ermittelt. An diese Erfassung der Konfigurationsdaten schließt sich ein sechster Schritt 6 an.

Im sechsten Schritt 6 werden die Konfigurationsdaten, die von der Slave-Station gesendet wurden, mit der Profildefinition aus Phase 0 verglichen. Liegt ein gültiges Profil vor, so werden die Konfigurationsdaten wiederum im Konfigurationsbereich der Master-Station zwischengespeichert und es schließt sich ein siebter Schritt 7 an. Falls ein ungültiges Profil vorliegt, erfolgt eine Meldung der Master-Station an einen übergeordneten Prozess. Es kann sich bspw. um die Ausgabe einer Fehlermeldung am Bildschirm oder ein Absetzen einer Störmeldung an das Wartungspersonal handeln. Dann erfolgt ein Sprung zum neunten Schritt 9 in Phase 2, der unten näher beschrieben wird.

Im siebten Schritt 7 sind alle Konfigurationsdaten vorhanden, um in der Master-Station einen Parametersatz für die Slave-Station aufbauen zu können. Dieser fertige Datensatz wird dazu verwendet, in Phase 2 die Slave-Station in den Nutzdatenaustausch zu überführen.

In Phase 2 schließt sich ein achter Schritt 8 an, bei dem der Parametersatz, der in Phase 1 für die Slave-Station angelegt wurde, dazu verwendet wird, die Slave-Station mit einer Standard-Initialisierungssequenz gemäß DIN 19245 bzw. EN 50170 von der Master-Station in den Nutzdatenaustausch zu überführen. Die Master-Station geht dabei in ihren Zustand OPERATE.

Daran schließt sich ein neunter Schritt 9 an. Die Master-Station befindet sich nun im Zustand OPERATE und führt mit den in Betrieb genommenen Slave-Stationen einen Nutzdatenaustausch durch. In diesem Zustand wird zyklisch geprüft, ob sich ein Timeout zur erneuten Prüfung einer Netzwerk-Adresse ergeben hat, wie dies oben zur Phase 1 beschrieben wurde. Ist dies der Fall, so wird versucht, eine neue Slave-Station entsprechend der Schritte 2 bis 7 in Betrieb zu nehmen. Daran schließt sich die Durchführung der Phase 2, wie oben beschrieben, an.

## Patentansprüche

1. Verfahren zur automatischen Gerätekonfiguration in einem Feldbus-System, insbesondere in EWSD, mit mehreren Netzwerk-Adressen für mehrere Slave-Stationen, an dem eine Master-Station und mindestens eine Slave-Station mit einer bestimmten Netzwerk-Adresse angeschlossen sind, mit folgenden Schritten:
Abfrage, ob an einer beliebigen Netzwerk-Adresse eine Slave-Station angeschlossen ist, nach deren Betriebszustand sowie deren Identifikationsnummer; Beantworten der Diagnoseabfrage durch die Slave-Station; Ermitteln der Konfigurationsdaten der Slave-Station; Aufbauen eines Parametersatzes der Slave-Station; Aktivieren der Slave-Station durch Überführen in den Nutzdatenaustausch.

2. Verfahren nach dem vorstehenden Anspruch, **dadurch gekennzeichnet, dass** als Feldbus-System ein PROFIBUS DP, als Master-Station ein PROFIBUS DP-Master und als Slave-Station ein PROFIBUS DP-Slave verwendet werden.

3. Verfahren nach einem der vorstehenden Ansprüche, **dadurch gekennzeichnet, dass** vor der Diagnoseabfrage die Master-Station in einen Timeout-Zustand und nach dem Aktivieren der Slave-Station in einen Operate-Zustand überführt wird.

4. Verfahren nach einem der vorstehenden Ansprüche, **dadurch gekennzeichnet, dass** es sich um eine Software-Applikation handelt, die auf einer Dienste- und Datenschnittstelle des Feldbus-Systems aufsetzt.

5. Verfahren nach einem der vorstehenden Ansprüche, **dadurch gekennzeichnet, dass** beim Warten einer Slave-Station auf ihre Aktivierung deren Konfigurationsdaten in der Master-Station zwischengespeichert werden.

6. Verfahren nach einem der vorstehenden Ansprüche, **dadurch gekennzeichnet, dass** bestimmte Netzwerk-Adressen des Feldbus-Systems für Slave-Stationen reserviert werden, die eine bestimmte Aufgabe erfüllen können, wobei dies insbesondere beim Hochlauf der Master-Station erfolgt.

7. Verfahren nach dem vorstehenden Anspruch, **dadurch gekennzeichnet, dass** für eine Netzwerk-Adresse ein Profil definiert wird, insbesondere eine maximale Anzahl von Input/Output-Bytes, das zur Erfüllung der bestimmten Aufgabe durch die Slave-Station nötig ist.

8. Verfahren nach dem vorstehenden Anspruch, **dadurch gekennzeichnet, dass** bei einem gültigen Profil die Konfigurationsdaten im Konfigurationsbereich der Master-Station zwischengespeichert werden, ansonsten eine Fehlermeldung erfolgt.

9. Verfahren nach einem der vorstehenden Ansprüche, **dadurch gekennzeichnet, dass** ein Melden, ob eine Netzwerk-Adresse auf das Vorhandensein einer Slave-Station geprüft werden soll, mittels einer Zeitsteuerung, insbesondere zyklisch, erfolgt.

10. Verfahren nach einem der vorstehenden Ansprüche, **dadurch gekennzeichnet, dass** die Netzwerk-Adressen in einem Wertebereich von 0 bis 126 inkrementiert werden.
